(19) **Europäisches Patentamt**

**European Patent Office**

**Office européen des brevets**

(11) **EP 0 599 722 B1**

(12) **FASCICULE DE BREVET EUROPEEN**

(45) Date de publication et mention
de la délivrance du brevet:
**19.05.2004 Bulletin 2004/21**

(51) Int Cl.$^7$: **H04L 7/02**

(21) Numéro de dépôt: **93402833.3**

(22) Date de dépôt: **22.11.1993**

(54) **Dispositif de récupération du rythme baud dans un récepteur pour modem**

Einrichtung zur Symboltaktrückgewinnung in einem Modemempfänger

Apparatus for band clock recovery in a modem receiver

(84) Etats contractants désignés:
**AT BE CH DE ES FR GB IT LI NL SE**

(30) Priorité: **25.11.1992 FR 9214168**

(43) Date de publication de la demande:
**01.06.1994 Bulletin 1994/22**

(73) Titulaire: **ALCATEL**
**75008 Paris (FR)**

(72) Inventeurs:
- **Caudron, Charles**
  **F-91590 Boissy le Cutte (FR)**
- **Tourbah, Abdallah**
  **F-91380 Chilly Mazarin (FR)**

(74) Mandataire: **El Manouni, Josiane et al**
**Compagnie Financière Alcatel**
**Départememt de Propriété Industrielle,**
**5, rue Noel Pons**
**92734 Nanterre Cedex (FR)**

(56) Documents cités:
**EP-A- 0 353 891**     **US-A- 4 334 313**
**US-A- 4 815 103**

- **AT & T TECHNICAL JOURNAL vol. 66, no. 6 ,
  Novembre 1987 , NEW YORK US pages 63 - 78
  GITLIN AND MEADORS 'Center - tap tracking
  algorithms for timing recovery'**

## Description

L'invention se rapporte à un appareil récepteur, notamment pour modem à fréquences vocales, comprenant un moyen pour recevoir et échantillonner un signal analogique d'entrée représentant des données numériques, un égaliseur auto-adaptatif ayant un filtre transverse à plusieurs coefficients multiplicatifs complexes ordonnés par rapport à un coefficient généralement central de plus grande norme pour engendrer des symboles à un rythme baud à partir du signal analogique échantillonné et un dispositif de récupération du rythme baud.

On connaît du document IEEE TRANSACTION AND COMMUNICATIONS, Vol.comm-26, N°5, "Passband Timing Recovery in All-Digital Modem Receiver - D. Godard", du 5 mai 1978, un dispositif de récupération du rythme baud pour un modem à modulation d'amplitude en quadrature dans lequel un signal de rythme baud est récupéré à partir de deux fréquences caractéristiques présentes dans le spectre du signal reçu de part et d'autre de la bande de fréquence utilisée pour transmettre les données numériques. Pour un signal reçu du type porteuse à 1800 Hz modulée, les deux fréquences caractéristiques sont 600 Hz et 3000 HZ. Le principe de la récupération du rythme baud est le suivant. Lorsqu'à un instant donné, il existe dans le spectre du signal reçu, un signal d'une fréquence voisine de 600 Hz, par exemple 604 Hz, il y a aussi un signal d'une fréquence voisine de 3000 Hz, par exemple 3004 Hz. Cette propriété permet de calculer des valeurs représentatives d'une dérive du rythme baud pour asservir un oscillateur. Pour cela, on utilise deux filtres centrés respectivement sur les fréquences de 600 Hz et 3000 Hz. Le filtre centré sur la fréquence de 600 Hz délivre les signaux sin(604Hz) et cos(604Hz). Le filtre centré sur la fréquence de 3000 Hz délivre les signaux sin(3004Hz) et cos(3004Hz). On a la relation trigonométrique suivante: $\sin(2400Hz)=\sin(3004Hz).\cos(604Hz)-\cos(3004Hz).\sin(604Hz)$.

La valeur du signal $\sin(2400Hz)$ échantillonné à 2400 Hz permet d'asservir l'oscillateur qui fournit le signal de rythme baud.

Un tel dispositif de récupération du rythme baud présente des inconvénients et notamment il ne peut pas être utilisé pour des lignes de transmission qui affaiblissent le signal analogique au voisinage de la fréquence caractéristique de 3000 Hz. Par ailleurs, il est courant d'utiliser les bandes de fréquence latérales disponibles dans le spectre de fréquence du signal analogique pour transmettre des données de services. Du fait de l'existence des deux fréquences caractéristiques utilisées pour la récupération du rythme baud, l'exploitation des bandes de fréquence latérales est rendue plus difficile.

L'invention a pour but de remédier à ces inconvénients.

A cet effet, l'invention a pour objet un appareil récepteur dans lequel le dispositif de récupération du rythme baud comprend un premier moyen sensible au déplacement, au cours du temps, d'un au moins desdits coefficients par rapport à ladite position centrale pour asservir un second moyen qui fournit un signal de rythme baud. Ces caractéristiques sont décrites dans le document US-A-4 334 313.

Le principe physique sur lequel repose l'invention est le suivant. Lorsqu'il existe une dérive du rythme baud, c'est à dire, lorsque l'instant d'échantillonnage du signal analogique est décalé par rapport à sa position idéale, l'algorithme de calcul des coefficients du filtre transverse de l'égaliseur auto-adaptatif agit sur les coefficients du filtre transverse en les déplaçant dans le registre à décalage du filtre transverse.

La détection du déplacement des coefficients peut se limiter à la détection du déplacement du coefficient de plus grande norme (coefficient principal) par rapport à la position centrale qu'il occupe normalement.

Selon la revendication 1, qui décrit un mode de réalisation particulièrement simple, peu coûteux et adapté notamment à des rythmes de transmission de données numériques de l'ordre de 2400 bauds, le dispositif de récupération de rythme comprend le filtre transverse de l'égaliseur auto-adaptatif et un filtre transverse auxiliaire recevant en parallèle des échantillons à égaliser et dont les sorties respectives servent au calcul de valeurs représentatives d'une dérive du rythme baud pour asservir un oscillateur, le filtre transverse auxiliaire ayant ses coefficients qui restent fixes.

Le phénomène de dérive de la fréquence porteuse du signal transmis est un phénomène bien connu. Une telle dérive est corrigée seulement en partie par un circuit spécialisé correcteur de dérive et l'égaliseur auto-adaptatif du récepteur est amené à compenser aussi cette dérive. La compensation opérée par l'égaliseur auto-adaptatif se traduit par une rotation lente des vecteurs représentant les coefficients du filtre transverse de l'égaliseur auto-adaptatif et donc du vecteur représentant les échantillons en sortie de ce filtre transverse. Dans le cas où, les valeurs d'erreur pour asservir l'oscillateur sont produites à partir des sorties du filtre transverse de l'égaliseur auto-adaptatif et du filtre transverse auxiliaire, il est nécessaire d'appliquer sur les vecteurs représentatifs des échantillons en sortie du filtre transverse auxiliaire, une rotation identique à celle des vecteurs représentatifs des échantillons en sortie du filtre transverse de l'égaliseur auto-adaptatif.

A cet effet, le dispositif de récupération de rythme comprend en outre un troisième moyen sensible à une variation dans le temps de l'argument du coefficient de plus grande norme du filtre transverse de l'égaliseur auto-adaptatif pour appliquer une correction d'argument à chaque échantillon en sortie du filtre transverse auxiliaire.

Un exemple de réalisation de l'invention est décrit ci-dessous en détail en référence aux figures.

La figure 1 est un schéma sous forme de blocs fonctionnels représentant un appareil récepteur selon l'invention.

La figure 2 est un schéma bloc qui représente plus en détail le filtre transverse de l'égaliseur auto-adapatif de l'appareil récepteur sur la figure 1.

La figure 3 est un schéma bloc qui représente plus en détail le filtre transverse auxiliaire du dispositif de récupération du rythme baud selon l'invention.

La figure 4 est un organigramme illustrant le fonctionnement d'un module de calcul faisant partie du dispositif de récupération de rythme selon l'invention.

Sur les figures, les mêmes références numériques désignent des éléments identiques.

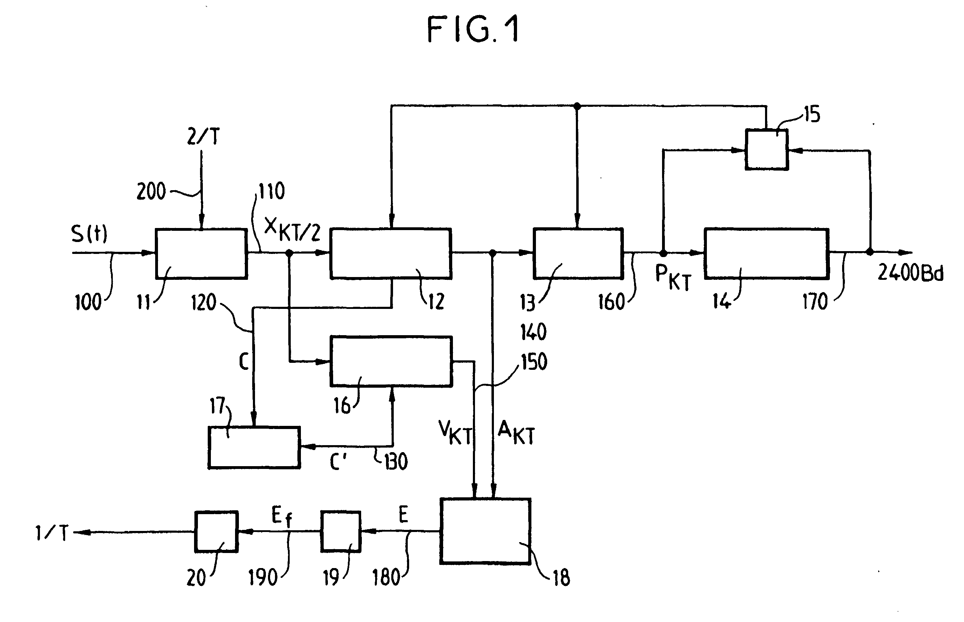

En se reportant d'abord à la figure 1, l'appareil récepteur, par exemple pour un modem relié à une ligne téléphonique, comprend un module d'entrée 11 qui reçoit le signal d'entrée analogique s(t) encodé pour représenter des données numériques. Ce module d'entrée comprend notamment un filtre, un échantillonneur, un démodulateur commandés par un signal présent en 200 à un rythme de 2/T.

Le module d'entrée fournit des échantillons complexes $X_{kT/2}$ à égaliser présents en 110. Les échantillons complexes $X_{kT/2}$ sont fournis en entrée de deux filtres transverses 12 et 16 ayant chacun plusieurs coefficients complexes multiplicatifs. Le filtre transverse 12 délivre des échantillons complexes égalisés $A_{kT}$ présents en 140 et le filtre transverse 16 délivre des échantillons complexes $U_{kT}$ présents en 150.

Les échantillons égalisés $A_{kT}$ provenant du filtre transverse 12 sont fournis en entrée d'un module correcteur de phase 13 classique en soi pour corriger une dérive de fréquence de la porteuse du signal s(t). Le module 13 produit des échantillons $P_{kT}$ présents en 160 qui sont fournis à un module de décision 14 classique en soi. Le module de décision 14 fournit des symboles décidés présents en 170 au rythme 1/T de 2400 bauds par exemple. L'entrée et la sortie du module de décision 14 sont reliées à un module de calcul 15. Le module de calcul 15 est agencé pour, d'une part, calculer les coefficients complexes du filtre transverse 12 à partir, par exemple du critère de l'erreur quadratique moyenne minimale. Il est agencé, d'autre part, pour calculer un coefficient de correction qui est fourni au module 13 pour corriger l'argument des échantillons complexes $A_{kT}$.

Il faut comprendre que le filtre transverse 12, le module de décision 14 et le module de calcul 15 forment un égaliseur auto-adaptatif à suréchantillonnage. Un tel égaliseur est construit autour d'un microprocesseur.

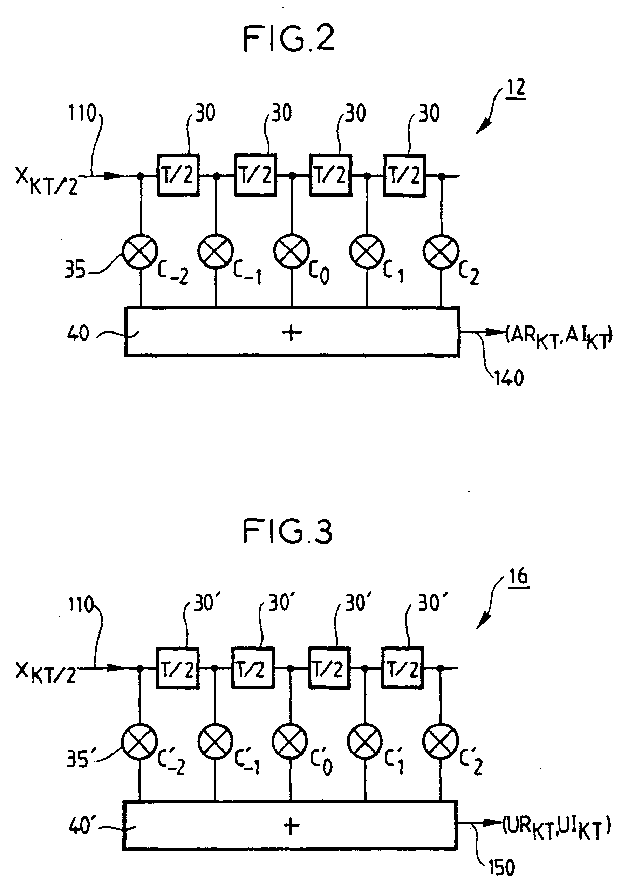

En se reportant maintenant aux figures 2 et 3, le filtre transverse 12 comprend plusieurs prises 30 associées à des multiplieurs 35 classiques en soi. Sur la figure 2, cinq multiplieurs sont représentés. Les multiplieurs sont agencés pour multiplier les échantillons complexes $X_{kT/2}$ présents en 110 et pris aux instants successifs (k-2)T/2, (k-1)T/2,(k)T/2,(k+1)T/2,(k+2)T/2, T/2 désignant un demi-temps baud, respectivement par les coefficients $C_{-2}$, $C_{-1}$,$C_0$,$C_1$,$C_2$. Les résultats des multiplications sont sommés dans un additionneur 40 qui produit en sortie des échantillons complexes égalisés $A_{kT}$ ayant comme partie réelle $AR_{kT}$ et comme partie imaginaire $AI_{kT}$. Il est entendu que ce filtre 12 pourrait avoir plus de prises 30, de multiplieurs 35 et donc de coefficients multiplicatifs C.

Sur la figure 3, le filtre transverse auxiliaire 16 comprend aussi plusieurs prises 30' associées à des multiplieurs 35' classiques en soi. Les cinq multiplieurs représentés sont agencés pour multiplier les échantillons complexes $X_{kT/2}$ présents en 110 par les coefficients multiplicatifs complexes $C'_{-2}$,$C'_{-1}$,$C'_0$,$C'_1$,$C'_2$. Les résultats des multiplications complexes sont sommés dans un additionneur 40' qui produit en sortie des échantillons complexes $U_{kT}$ ayant comme partie réelle $UR_{kT}$ et comme partie imaginaire $UI_{kT}$. Les coefficients C' du filtre 16 ne sont pas ajustés au cours du temps c'est-à-dire que leur norme reste constante.

Sur les figures 2 et 3, le coefficient de plus grande norme (coefficient principal) est désigné avec l'indice 0. $C_0$ est donc le coefficient principal du filtre 12 et $C'_0$ est le coefficient principal du filtre 16.

Dans le cas où il existe une dérive du rythme baud, le coefficient $C_0$ se déplace vers la gauche ou vers la droite par rapport à sa position centrale représentée sur la figure 2. Il en est de même des autres coefficients $C_{-2}$,$C_{-1}$,$C_1$,$C_2$. Du fait que les coefficients C' du filtre 16 ne sont pas ajustés, le coefficient $C'_0$ reste fixe par rapport à sa position centrale représentée figure 3. Il en est de même des autres coefficients du filtre 16.

En revenant à la figure 1, les échantillons $U_{kT}$ et les échantillons $A_{kT}$ présents respectivement en 150 et 140 sont fournis à un module de calcul 18. Le module de calcul 18 fournit en sortie des valeurs numériques E présentes en 180 qui représentent une dérive du rythme baud si une telle dérive existe. Les valeurs successives E sont passées dans un filtre 19 qui produit un signal d'erreur de rythme Ef présent en 190. Le signal d'erreur de rythme Ef asservit un oscillateur 20 qui fournit le signal de rythme baud 1/T.

Le mise en place et le fonctionnement du dispositif de récupération du rythme baud selon l'invention sont les suivants.

L'oscillateur 20 est tout d'abord isolé du dispositif de récupération du rythme baud pour délivrer un signal de rythme baud local à fréquence non ajustée. Les échantillons complexes $X_{kT/2}$ fournis par le module 11 sont égalisés par l'égalisateur auto-adaptatif et les coefficients C du filtre transverse 12 sont ajustés par le module de calcul 15 de manière à minimiser l'erreur quadratique moyenne en sortie de l'égaliseur auto-adaptatif. Lorsque l'égaliseur auto-adaptatif a convergé (la détection de la convergence pouvant être réalisée par comparaison de l'erreur quadratique par rapport à un seuil fixé au préalable), le coefficient principal $C_0$ du filtre 12 occupe normalement une position centrale tel que représenté figure 2. Les coefficients C du filtre 12 sont ensuite recopiés automatiquement par un programme adapté dans le filtre 16 et deviennent les coefficients C'. Le coefficient principal $C'_0$ occupe par conséquent une position centrale tel que représenté figure 3. Il est entendu que le filtre 16 peut comporter un nombre de coefficients multiplicatifs plus petit que le filtre 12 de sorte que certains seulement des coefficients C du filtre 12 sont des coefficients C' du filtre 16. Il s'agit de préférence du coefficient de plus grande norme C0 (coefficient principal) et des coefficients au voisinage du coefficient principal.

A la suite de ces opérations, le dispositif de récupération du rythme baud est mis en service. Les sorties des filtres 12 et 16 sont synchronisées de sorte qu'une valeur E représentative d'une dérive du rythme baud est calculée par le module 18 à partir de la relation suivante:

$$E = AR_{-1}.UR + AI_{-1}.UI - AR.UR_{-1} - AI.UI_{-1}$$

où :

AR désigne la partie réelle d'un échantillon complexe A en sortie du filtre transverse 12 à l'instant $T_0$ défini comme l'instant présent;
AI désigne la partie imaginaire de l'échantillon A;
UR désigne la partie réelle d'un échantillon complexe U en sortie du filtre transverse auxiliaire 16 à l'instant $T_0$;
UI désigne la partie imaginaire de l'échantillon U;
$AR_{-1}$ désigne la partie réelle d'un échantillon complexe $A_{-1}$ en sortie du filtre transverse 12 à l'instant $T_{-1}$ défini comme l'instant précédent l'instant $T_0$ d'un temps baud;
$AI_{-1}$ désigne la partie imaginaire de l'échantillon $A_{-1}$;
$UR_{-1}$ désigne la partie réelle d'un échantillon complexe $U_{-1}$ en sortie du filtre transverse auxiliaire 16 à l'instant $T_{-1}$;
$UI_{-1}$ désigne la partie imaginaire de l'échantillon $U_{-1}$.

Une valeur E non nulle traduit un déplacement du coefficient $C_0$ du filtre 12 par rapport à la position centrale qu'il occupe en l'absence de dérive du rythme baud. Cette position correspond à celle du coefficient $C'_0$ du filtre 16. Ainsi, lorsque les valeurs successives E tendent à être négatives, cela signifie que le rythme baud d'émission est supérieur à celui du récepteur. La fréquence du signal de rythme baud fourni par l'oscillateur 20 est augmentée. Dans le cas inverse, lorsque les valeurs successives E tendent à être positives, la fréquence du signal de rythme baud fourni par l'oscillateur 20 est diminuée. Un filtre 19 recevant en entrée les valeurs successives E, traduit ces valeurs par le signal d'asservissement Ef.

Selon un autre aspect de l'invention, un module de calcul 17 est en outre prévu pour détecter une rotation lente des vecteurs représentatifs des coefficients C du filtre 12 en raison d'une dérive de la fréquence de la porteuse du signal s(t) et corriger en conséquence les échantillons en sortie du filtre 16.

La détection s'effectue facilement en calculant une valeur d'angle D correspondant à la différence de l'argument du coefficient principal $C_0$ du filtre 12 et de l'argument du coefficient principal $C'_0$ du filtre 16. Cette valeur d'angle D est sensiblement égale à la valeur du sinus de l'angle existant entre les formes trigonométriques de deux coefficients complexes principaux $C_0$ et $C'_0$ si on considère que cette valeur d'angle est petite. Le calcul de D doit bien entendu être réalisé périodiquement à des intervalles de temps relativement courts par rapport au phénomène de dérive de fréquence.

Il vient que D s'exprime par la relation suivante:

$$D = r'.x - r.x'$$

où
r + j.x est la représentation trigonométrique de $C_0$
et
r' +j.x' est la représentation trigonométrique de $C'_0$.

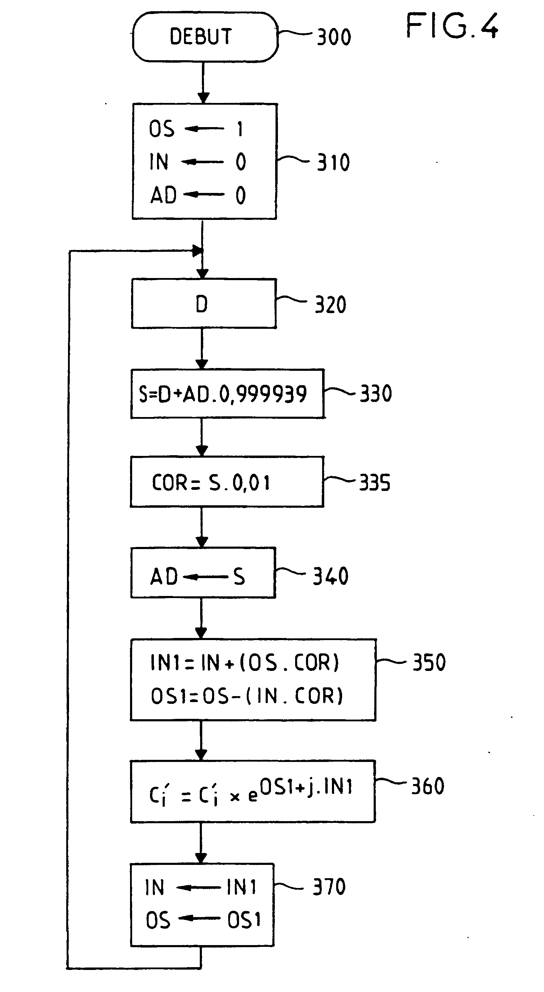

Après chaque calcul de la valeur D, le module de calcul 17 multiplie chaque coefficients C' du filtre 16 par un nombre complexe de correction ayant un module unitaire et un argument variant avec D. Les arguments des échantillons complexes $U_{kT}$ sont en conséquence corrigés. Si $C'_i$ est un coefficient du filtre 16 à corriger, La nouvelle valeur du coefficient $C'_i$ est obtenue en appliquant la procédure de calcul mise en oeuvre dans le module de calcul 17 et illustrée à la figure 4.

Cette procédure débute par l'étape 300. Dans cette étape les coefficients C du filtre 12 sont recopiés dans le filtre 16. Des variables OS, IN, AD sont initialisées respectivement à 1, 0 et 0 dans une étape suivante 310. Une valeur d'angle D est calculée dans l'étape 320 à partir de la relation donnée précédemment. Un filtrage du premier ordre est réalisé sur la valeur d'angle D dans l'étape 330 qui aboutit au calcul d'une variable S à partir de la relation suivante:

$$S = D + AD.0,999939$$

Dans l'étape 335, on calcule une variable COR à partir de la relation suivante:

$$COR = S.0,01$$

Dans l'étape 340, la variable AD est mise à jour et est égale à la valeur S.
Des variables OS1 et IN1 sont calculées à partir des relations suivantes dans l'étape 350:

$$OS1 = OS - (COR.IN)$$

$$IN1 = IN + (COR.OS).$$

Dans l'étape 360, le module 17 remplace la valeur de chaque coefficient complexe $C'_i$ du filtre 16 par une nouvelle valeur donnée par la relation suivante :

$$C'_i = C'_i . e^{OS1 + j.IN1}$$

où e désigne la fonction exponentielle.

Dans l'étape 370, les variables IN et OS sont remplacées par les variables IN1 et OS1 respectivement. La procédure se poursuit par retour à l'étape 320 pour le calcul d'une nouvelle valeur d'angle D.

Il est entendu que si les valeurs successives E pour l'asservissement de l'oscillateur 20 sont calculées directement à partir des valeurs des coefficients $C_i$ et $C'_i$ des filtres 12 et 16, il est inutile de prévoir un module 17 de compensation d'une dérive de fréquence.

Par ailleurs, l'égaliseur auto-adaptatif du récepteur peut être à simple échantillonnage pour des transmissions à bas débits .

**Revendications**

1. Un appareil récepteur, notamment pour modem à fréquences vocales, comprenant un moyen (11) pour recevoir et échantillonner un signal analogique d'entrée représentant des données numériques, un égaliseur auto-adaptatif (12,14,15) ayant un filtre transverse (12) à plusieurs coefficients multiplicatifs complexes ordonnés par rapport à un coefficient généralement central de plus grande norme pour engendrer des symboles à un rythme baud à partir du signal analogique échantillonné, et un dispositif de récupération du rythme baud, comprenant un premier moyen (12,16,18,19) sensible au déplacement, au cours du temps, d'au moins un desdits coefficients par rapport à ladite position centrale pour asservir un second moyen (20) qui fournit un signal de rythme baud, **caractérisé en ce que** le dispositif de récupération du rythme baud comprend:

- le filtre transverse (12) de l'égaliseur auto-adaptatif,
- un filtre transverse auxiliaire (16) ayant comme coefficients certains au moins des coefficients de l'égaliseur auto-adaptatif prélevés à un instant donné au cours de la réception du signal analogique, lesdits filtres transverses (12,16) recevant en parallèle des échantillons complexes à égaliser, lesdits coefficients du second égaliseur ayant chacun une norme maintenue constante dans le temps,
- un premier module de calcul (18) relié à la sortie du filtre transverse de l'égaliseur auto-adaptatif et du filtre transverse auxiliaire pour fournir des premières valeurs représentatives d'une dérive du rythme baud,
- et un oscillateur (20) asservi à partir desdites premières valeurs successives pour fournir le signal de rythme baud.

2. L'appareil selon la revendication 1, dans lequel une première valeur E représentative d'une dérive du rythme baud est calculée à partir de la relation suivante:

$$E = AR_{-1}.UR + AI_{-1}.UI - AR.UR_{-1} - AI.UI_{-1}$$

où :

AR désigne la partie réelle d'un échantillon complexe A en sortie du filtre transverse de l'égaliseur auto-adaptatif à l'instant $T_0$ défini comme l'instant présent;
AI désigne la partie imaginaire de l'échantillon A;
UR désigne la partie réelle d'un échantillon complexe U en sortie du filtre transverse auxiliaire à l'instant $T_0$;
UI désigne la partie imaginaire de l'échantillon U;
$AR_{-1}$ désigne la partie réelle d'un échantillon complexe $A_{-1}$ en sortie du filtre transverse de l'égaliseur auto-adaptatif à l'instant $T_{-1}$ défini comme l'instant précédent l'instant $T_0$ d'un temps baud;
$AI_{-1}$ désigne la partie imaginaire de l'échantillon $A_{-1}$;
$UR_{-1}$ désigne la partie réelle d'un échantillon complexe $U_{-1}$ en sortie du filtre transverse auxiliaire à l'instant $T_{-1}$;
$UI_{-1}$ désigne la partie imaginaire de l'échantillon $U_{-1}$.

3. L'appareil selon la revendication 1, dans lequel le signal de rythme baud à une fréquence qui augmente quand la première valeur E est inférieure à zéro et qui diminue quand la première valeur E est supérieure à zéro.

4. L'appareil selon la revendication 2, dans lequel le signal analogique reçu est une porteuse ayant une fréquence modulée, le dispositif de récupération de rythme comprenant en outre un troisième moyen (17) sensible à une variation dans le temps de l'argument d'un coefficient, de préférence celui de plus grande norme, du filtre transverse (12) de l'égaliseur auto-adaptatif pour appliquer une correction d'argument à chaque échantillon en sortie du filtre transverse auxiliaire (16).

5. L'appareil selon la revendication 4, comprenant un second module de calcul (17) agencé pour:

-   effectuer la différence entre les arguments respectifs du coefficient de plus grande norme du filtre transverse (12) de l'égaliseur auto-adaptatif et du coefficient de plus grande norme du filtre transverse auxiliaire (16) pour produire au moins une valeur d'angle représentative d'une dérive de la fréquence porteuse,
-   et multiplier chaque coefficient du filtre transverse auxiliaire (16) par une valeur complexe ayant comme argument ladite valeur d'angle.

6. L'appareil selon l'une des revendications précédentes, dans lequel l'égaliseur auto-adaptatif est un égaliseur à sur-échantillonnage.


**Patentansprüche**

1. Ein Empfangsgerät, insbesondere für ein Tonfrequenzmodem, aufweisend eine Vorrichtung (11) zum Empfangen und Abtasten eines für digitale Daten repräsentativen analogen Eingangssignals, einen selbsteinstellenden Entzerrer (12, 14, 15), der ein Transversalfilter (12) mit mehreren komplexen Multiplikations-Koeffizienten besitzt, die im Verhältnis zu einem im allgemeinen zentralen Koeffizienten einer größeren Norm geordnet sind, um Symbole mit einem Symboltakt ausgehend von dem abgetasteten Analogsignal zu erzeugen, sowie eine Vorrichtung zur Rückgewinnung des Symboltakts, aufweisend eine erste Vorrichtung (12, 16, 18, 19), die in Bezug auf die zeitliche Verschiebung von mindestens einem der genannten Koeffizienten gegenüber der genannten zentralen Position empfindlich ist, um eine zweite Vorrichtung (20) anzutriggern, die ein Symboltaktsignal liefert, **dadurch gekennzeichnet, dass** die Einrichtung zur Symboltaktrückgewinnung folgendes aufweist:

-   das Transversalfilter (12) des selbsteinstellenden Entzerrers;
-   ein Hilfstransversalfilter (16), das als Koeffizienten zumindest einige der Koeffizienten des selbsteinstellenden Entzerrers besitzt, die zu einem gegebenen Zeitpunkt im Verlauf des Empfangs des Analogsignals abgetastet wurden, wobei diese Transversalfilter (12, 16) im Parallelbetrieb zu entzerrende komplexe Momentanwerte empfangen, und wobei von diesen Koeffizienten des zweiten Entzerrers jeder eine Norm besitzt, die im zeitlichen Verlauf konstant gehalten wird;
-   ein erstes Rechenmodul (18), das mit dem Ausgang des Transversalfilters des selbsteinstellenden Entzerrers und des Hilfstransversalfilters verbunden ist, um erste Werte zu liefern, die für eine Drift des Symboltakts repräsentativ sind;
-   und einen Oszillator (20), der ausgehend von diesen ersten aufeinander folgenden Werten angetriggert wird, um das Symboltaktsignal zu liefern.

2. Gerät nach Anspruch 1, bei dem ein erster Wert E, der für eine Drift des Symboltakts repräsentativ ist, ausgehend von der folgenden Beziehung berechnet wird:

$$E = AR_{-1}.UR + AI_{-1}.UI - AR.UR_{-1} - AI.UI_{-1}$$

wobei AR den reellen Teil eines komplexen Momentanwerts A am Ausgang des Transversalfilters des selbsteinstellenden Entzerrers zum Zeitpunkt $T_0$ bezeichnet, der als der gegenwärtige Zeitpunkt definiert ist;
AI den imaginären Teil des Momentanwerts A bezeichnet;
UR den reellen Teil eines komplexen Momentanwerts U am Ausgang des Hilfstransversalfilters 16 zum Zeitpunkt $T_0$ bezeichnet;
UI den imaginären Teil des Momentanwerts U bezeichnet;
$AR_{-1}$ den reellen Teil eines komplexen Momentanwerts $A_{-1}$ am Ausgang des Transversalfilters des selbsteinstellenden Entzerrers zum Zeitpunkt $T_{-1}$ bezeichnet, der als der Zeitpunkt definiert ist, welcher dem Zeitpunkt $T_0$ um eine Taktzeit vorausgeht;
$AI_{-1}$ den imaginären Teil des Momentanwerts $A_{-1}$ bezeichnet;
$UR_{-1}$ den reellen Teil eines komplexen Momentanwerts $U_{-1}$ am Ausgang des Hilfstransversalfilters zum Zeitpunkt $T_{-1}$ bezeichnet;
$UI_{-1}$ den imaginären Teil des Momentanwerts $U_{-1}$ bezeichnet.

3. Gerät nach Anspruch 1, bei dem das Symboltaktsignal eine Frequenz hat, die zunimmt, wenn der erste Wert E kleiner als Null ist, und die abnimmt, wenn der erste Wert E größer als Null ist.

4. Gerät nach Anspruch 2, bei dem das empfangene Analogsignal eine Trägerwelle ist, welche eine modulierte Frequenz hat, wobei die Einrichtung zur Taktrückgewinnung außerdem eine dritte Vorrichtung (17) aufweist, die gegenüber einer zeitlichen Veränderung des Arguments eines Koeffizienten empfindlich ist, vorzugsweise desjenigen der größten Norm, [nämlich] des Koeffizienten für das Transversalfilter (12) des selbsteinstellenden Entzerrers, um eine Argumentkorrektur bei jedem Momentanwert am Ausgang des Hilfstransversalfilters (16) anzuwenden.

5. Gerät nach Anspruch 4, aufweisend ein zweites Rechenmodul (17), welches ausgelegt ist:

- zur Bildung der Differenz zwischen den jeweiligen Argumenten des Koeffizienten der größten Norm für das Transversalfilter (12) des selbsteinstellenden Entzerrers und des Koeffizienten mit der größten Norm für das Hilfstransversalfilter (16), um zumindest einen Winkelwert zu erzeugen, der für eine Drift der Trägerfrequenz repräsentativ ist;
- zur Multiplikation jedes Koeffizienten des Hilfstransversalfilters (16) mit einem komplexen Wert, welcher als Argument diesen Winkelwert hat.

6. Gerät nach einem der vorhergehenden Ansprüche, bei dem der selbsteinstellende Entzerrer ein Entzerrer mit Überabtastung ist.

**Claims**

1. Receiver circuit, in particular receiver circuit for audio frequency modems, comprising means (11) for receiving and sampling an analogue input signal representing digital data, an adaptive equaliser (12, 14, 15) having a transversal filter (12) with a plurality of complex multiplier coefficients ordered relative to a usually central highest norm coefficient to generate symbols at a timing rate from the sampled analogue signal, and a timing recovery device comprising first means (12, 16, 18, 19) responsive to displacement of at least one of said coefficients relative to said central position to control second means (20) supplying a timing signal, **characterised in that** the timing recovery device comprises:

- the transversal filter (12) of the adaptive equaliser,
- an auxiliary transversal filter (16) having as its coefficients at least some of the coefficients of the adaptive equaliser at a given time during reception of the analogue signal, said transversal filters (12, 16) receiving complex samples to be equalised in parallel, said coefficients of the second equaliser each having a norm which is kept constant,
- a first calculator module (18) connected to the output of the transversal filter of the adaptive equaliser and of the auxiliary transverse filter to supply first values representative of timing drift, and
- an oscillator (20) controlled by said successive first values to supply the timing signal.

2. Receiver circuit according to claim 1 wherein a first value E representing timing drift is calculated from the following equation:

$$E = AR_{-1}.UR + AI_{-1}.UI - AR.UR_{-1} - AI.UI_{-1}$$

in which:

AR denotes the real part of a complex sample A at the output of the transversal filter of the adaptive equaliser at the time $T_0$ defined as the present time;
AI denotes the imaginary part of the sample A;
UR denotes the real part of a complex sample U at the output of the auxiliary transversal filter at time $T_0$;
UI denotes the imaginary part of the sample U;
$AR_{-1}$ denotes the real part of a complex sample $A_{-1}$ at the output of the transversal filter of the adaptive equaliser at the time $T_{-1}$ defined as the time preceding the time $T_0$ by one baud period;
$AI_{-1}$ denotes the imaginary part of the sample $A_{-1}$;
$UR_{-1}$ denotes the real part of a complex sample $U_{-1}$ at the output of the auxiliary transversal filter at time $T_{-1}$;
$UI_{-1}$ denotes the imaginary part of the sample $U_{-1}$.

3. Receiver circuit according to claim 1 wherein the timing signal frequency increases when the first value E is below zero and decreases when the first value E is above zero.

4. Receiver circuit according to claim 2 wherein the received analogue signal is a frequency modulated-carrier, the timing recovery device further comprising third means (17) responsive to variation in the argument of a coefficient, preferably the highest norm coefficient, of the transversal filter (12) of the adaptive equaliser to apply an argument correction to each sample at the output of the auxiliary transversal filter (16).

5. Receiver circuit according to claim 4 comprising a second calculator module (17) adapted to:

- calculate the difference between the respective arguments of the highest norm coefficient of the transversal filter (12) of the adaptive equaliser and the highest norm coefficient of the auxiliary transversal filter (16) to produce at least one angle value representing carrier frequency drift, and

- multiply each coefficient of the auxiliary transversal filter (16) by a complex value whose argument is said angle value.

6. Receiver circuit according to any one of the preceding claims wherein the adaptive equaliser is an oversampling type equaliser.

# FIG.1

EP 0 599 722 B1

# FIG.2

# FIG.3

FIG.4

```
        ┌──────────────┐
        │    DEBUT     │────── 300
        └──────────────┘
               │
               ▼
        ┌──────────────┐
        │  OS ◄── 1    │
        │  IN ◄── 0    │────── 310
        │  AD ◄── 0    │
        └──────────────┘
               │
    ┌──────────┤
    │          ▼
    │   ┌──────────────┐
    │   │      D       │────── 320
    │   └──────────────┘
    │          │
    │          ▼
    │   ┌────────────────────┐
    │   │ S=D+AD.0,999939    │────── 330
    │   └────────────────────┘
    │          │
    │          ▼
    │   ┌────────────────────┐
    │   │ COR= S.0,01        │────── 335
    │   └────────────────────┘
    │          │
    │          ▼
    │   ┌──────────────┐
    │   │  AD ◄── S    │────── 340
    │   └──────────────┘
    │          │
    │          ▼
    │   ┌────────────────────────┐
    │   │ IN1= IN+(OS.COR)       │────── 350
    │   │ OS1= OS-(IN.COR)       │
    │   └────────────────────────┘
    │          │
    │          ▼
    │   ┌────────────────────────┐
    │   │ C'ᵢ = C'ᵢ × e^(OS1+j.IN1) │──── 360
    │   └────────────────────────┘
    │          │
    │          ▼
    │   ┌──────────────┐
    │   │  IN ◄── IN1  │────── 370
    │   │  OS ◄── OS1  │
    │   └──────────────┘
    │          │
    └──────────┘
```

$$S = D + AD.0{,}999939$$

$$COR = S.0{,}01$$

$$IN1 = IN + (OS.COR)$$

$$OS1 = OS - (IN.COR)$$

$$C'_i = C'_i \times e^{OS1+j.IN1}$$